# EUROPÄISCHE PATENTSCHRIFT

(11) **EP 0 860 603 B1**
(45) Veröffentlichungstag und Bekanntmachung des Hinweises auf die Patenterteilung: **04.08.1999**
(21) Anmeldenummer: 97102496.3
(22) Anmeldetag: 14.02.1997
(51) Int. Cl.: F02G 3/02, F02B 75/02

(54) **Brennkraftmaschine mit zyklischer Verbrennung**
Internal combustion engine with cyclic combustion
Moteur à combustion interne avec combustion cyclique

(43) Veröffentlichungstag der Anmeldung: 26.08.1998
(73) Patentinhaber: Andonov, Kalin, 5310 Mondsee (AT)
(72) Erfinder: Andonov, Kalin, 5310 Mondsee (AT)

(56) Entgegenhaltungen:
- EP-A- 0 421 033
- US-A- 4 133 172
- US-A- 4 149 370
- US-A- 5 499 605

## Beschreibung

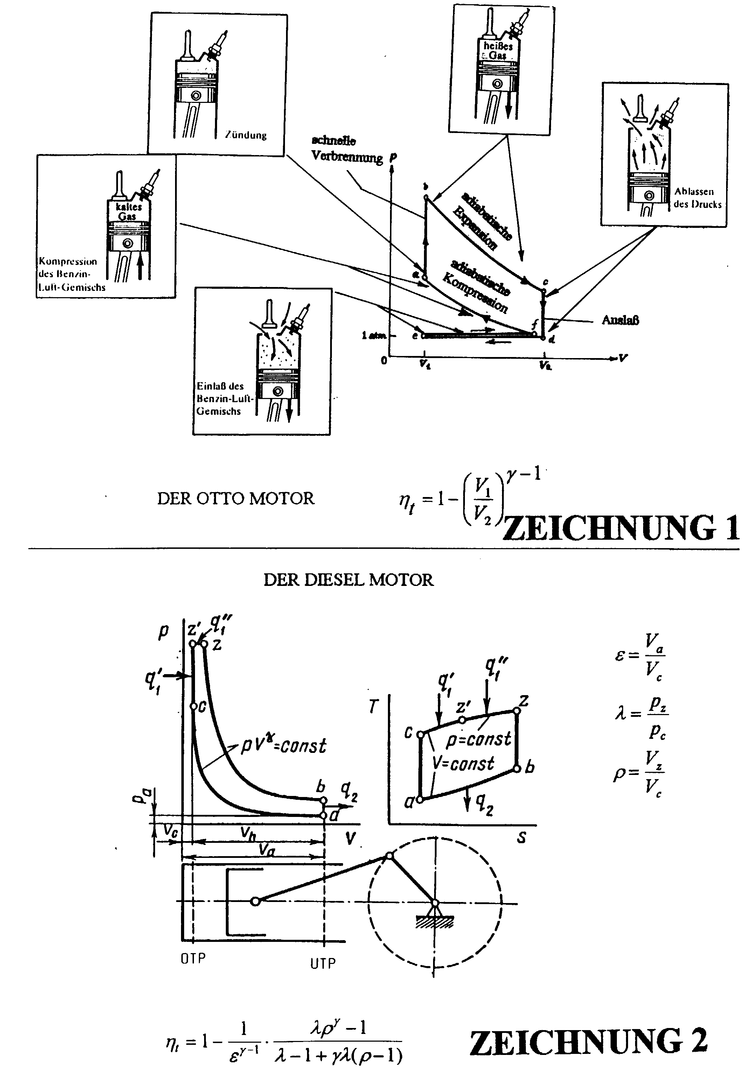

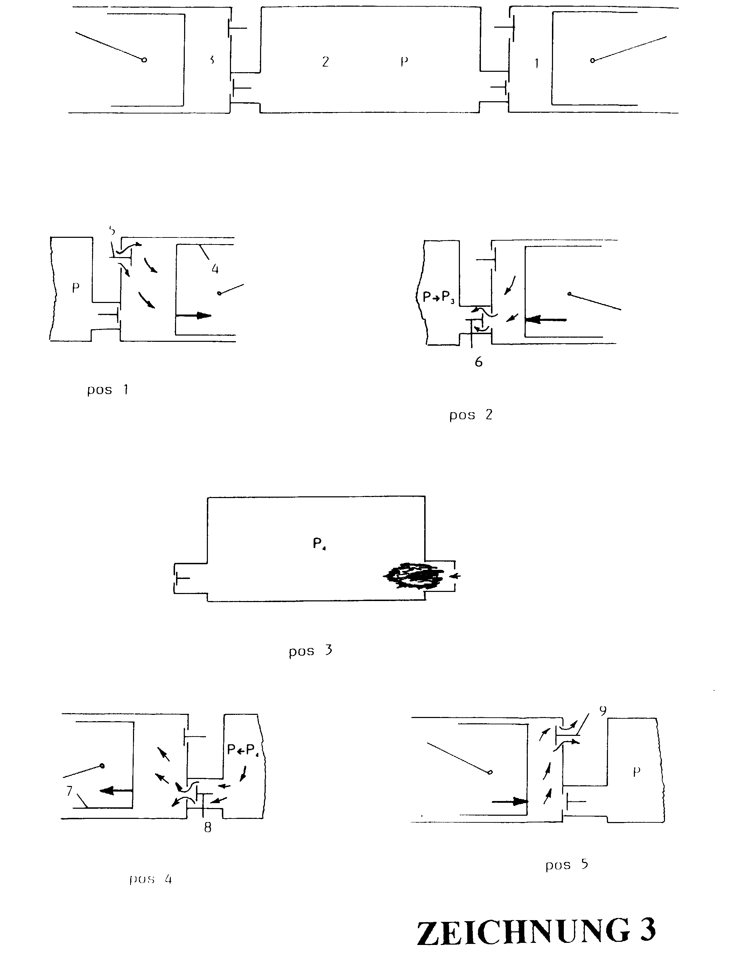

Die Erfindung bezieht sich auf Verbrennungsmotoren gemäß Ansprüchen 1 und 2, die sehr häufig zum Einsatz kommen. Die Zeichnungen 1 und 2 zeigen die PV Diagramme und den Wirkungsgrad der zwei bekannten Motoren, der OTTO und der DIESEL Motor. Die Aufgabe der Konstrukteure war es, einen hohen Wirkungsgrad bei geringem Spritverbrauch zu erreichen. Das Hauptproblem beim OTTO Motor ist, daß das Kompressionsverhältnis beschränkt ist, deswegen hat er einen Wirkungsgrad bis 35%. Die Verbrennung verläuft nicht vollständig und qualitativ mit Entstehung von toxischen Stoffen und thermischen Verlusten.

Beim DIESEL Motor läuft die Verbrennung bei gemischtem Wärmezufuhrzyklus ab. Der Wirkungsgrad reicht bis 45%. Das Hauptproblem hier ist, daß die Komprimierung ohne Wärmeübertragung abläuft(adiabatisch). Die Einspritzung, Vermischung und Verbrennung des Sprits brauchen eine kurze Zeit. Es entstehen Stellen mit schlechter und unvollständiger Verbrennung mit toxischen Stoffen und thermischen Verlusten.

Gegenstand der vorliegenden Erfindung ist ein Verbrennungsmotor mit separater Kammer mit konstant-hohem Druck, der mit einem eigenen thermodynamischen Zyklus arbeitet(anders als beim OTTO und DIESEL Motor).

Die OTTO und DIESEL Motoren haben vor allem deshalb so niedrige Wirkungsgrade. weil die Komprimierung, Verbrennung und die Expansion in der selben Kammer sehr schnell stattfinden. Die Kammer selbst entspricht widersprüchlichen Bedingungen, bei der Kompression zum Beispiel wird Wärmeübertragung gebraucht, aber bei der Expansion soll sie verhindert werden.

Der vorgestellte Motor hat eine innere Verbrennung, bei der die Komprimierung, Verbrennung und Expansion in verschiedenen Räumen(Kammern) ablaufen, welche das Gas eine nach der anderen durchläuft, indem es angesaugt, komprimiert, verbrannt, expandiert und zum Schluß ausgelassen wird. Die verschiedenen Räume(Kammern) für Komprimierung, Verbrennung und Expansion sind "spezialisiert", das heißt, daß sie den Anforderungen der einzelnen Prozessen entsprechen. So hat man zum Beispiel bei der Komprimierung eine Wärmeabfuhr(isothermisch), in der Verbrennungs- und Expansionskammer dagegen eine kleine Wärmeübertragung (siehe z.B. US-A-4133172 und EP-A-421033).

### Zu lösende technische Aufgabe

Gegenstand der Erfindung ist ein Verbrennungsmotor des oben angeführten Typs, mit verbesserter Verbrennung, einem hohen Wirkungsgrad und kleinen Spritverbrauch.

### Darstellung der Erfindung

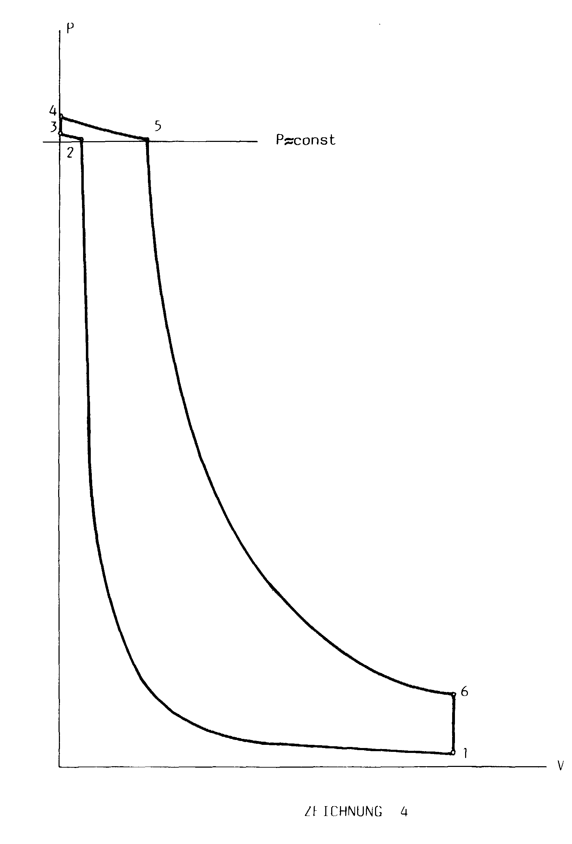

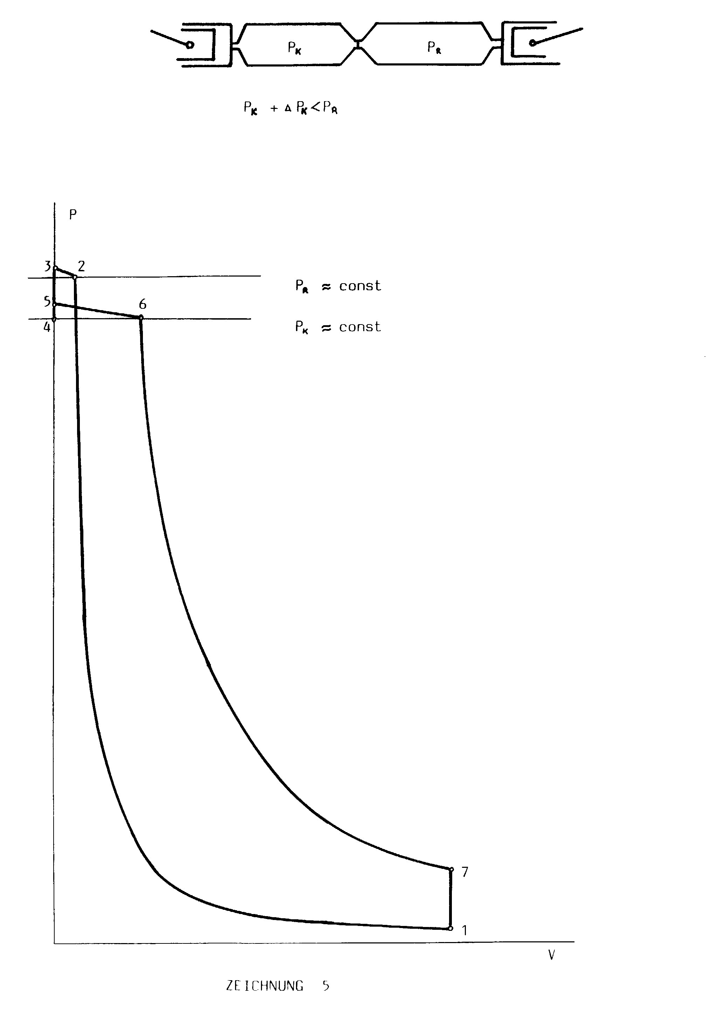

Wir haben zwei Typen von Verbrennungen: zyklische und dauerhafte Verbrennung(360° Zyklus). In Zeichnung 3 ist ein Motor mit zyklischer Verbrennung dargestellt, Zeichnung 4 zeigt die PV Diagramme dazu. Dieser hat eine Verdichtungskammer 1, in der die Luft angesaugt und komprimiert wird, eine Verbrennungskammer 2, in der die Einspritzung und Verbrennung abläuft. Diese Kammer ist immer unter hohem und konstantem Druck P. In der Expansionskammer 3 findet die Expansion des verbrannten Gases statt. Zum Schluß wird dieses Gas in der Atmosphäre ausgelassen.

Position I- Der Kolben 4 in der Komprimierungskammer bewegt sich vom oberen Totpunkt zum unteren Totpunkt. Einlaßventil 5 ist geöffnet und frische Luft wird angesaugt.

Position II- Der Kolben 4 in der Komprimierungskammer bewegt sich vom unteren Totpunkt zum oberen Totpunkt. Der Druck steigt von P₁=1Atm auf P₂=P(Druck der inneren Verbrennungskammer 2). Ventil 6 wird geöffnet und die ganze frische Luft strömt in der Verbrennungskammer. Der Druck in der Verbrennungskammer 2 wird geringfügig auf P₃ erhöht.

Position III- Frische Luft strömt in der Verbrennungskammer, wo Sprit eingespritzt, vermischt und verbrannt wird. Da die Verbrennungskammer ein relativ größeres Volumen als die Verdichtungskammer hat, wird der Druck geringfügig auf P₄=P+ΔP erhöht.

Position IV- Der Kolben 7 in der Expansionskammer 3 bewegt sich vom oberen Totpunkt zum unteren Totpunkt. Auslaßventil 8 ist geöffnet und die verbrannten Gase strömen hinein. Der Druck in der Verbrennungskammer sinkt von P₄=P+ΔP auf P₅=P, dann schließ das Ventil 8. Der Kolben bewegt sich zum unteren Totpunkt, wobei der Druck in der Expansionskammer von P₅ auf P₆ sinkt(adiabatisch).

Position V- Der Kolben 7 in der Expansionskammer 3 bewegt sich vom unteren zum oberen Totpunkt. Auslaßventil 9 ist geöffnet und die alle verbrannten Gase werden in der Atmosphäre ausgelassen.

Vom oben erklärten sieht man, daß die Verbrennung in der Kammer nur stattfinden kann, wenn Luft in der Kammer hineinströmt- zyklisch.

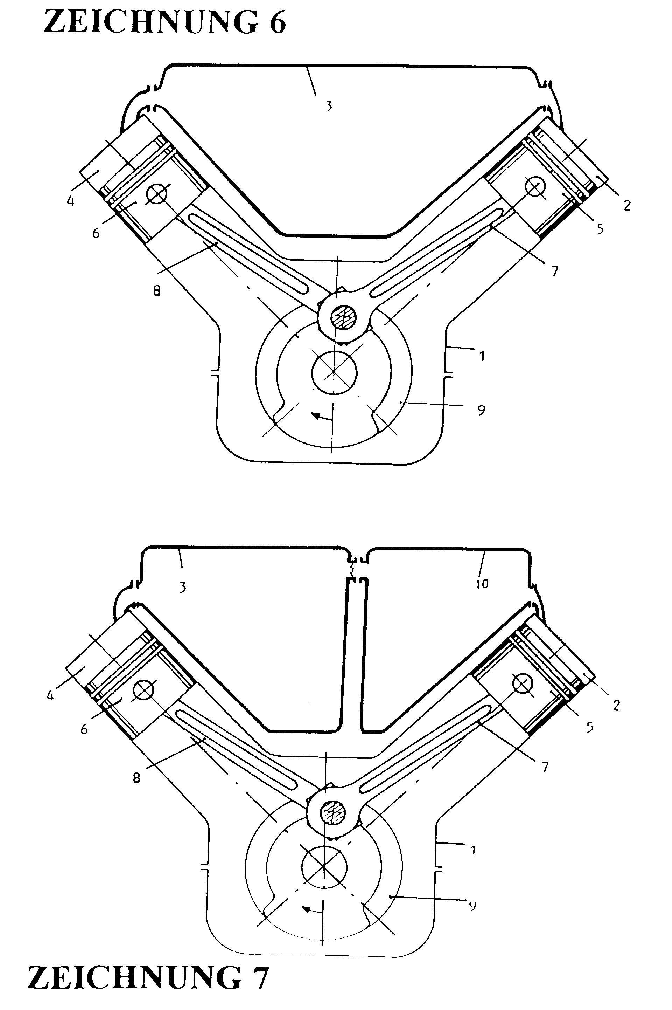

Zeichnung 5 zeigt einen Verbrennungsmotor mit ununterbrochener Verbrennung. Zwischen der Verdichtungs- und Verbrennungskammer ist ein Luftreservoir(Luftspeicher) eingebaut, indem der Druck immer hoch bleibt. Der Druck im Reservoir ist immer höher als der Druck in der Verbrennungskammer P_{R}>P+ΔP.
- 1-2: Komprimierung der Luft bis P₂=P_{R}
- 2-3: Einlaß von verdichteter Luft im Luftreservoir und geringfügige Erhöhung des Drucks im Reservoir auf P₃=P_{R}-ΔP_{R} (für 360°)
- 3-4: Auslas der Luft vom Reservoir in der Verbrennungskammer, wo sie mit Sprit vermischt und verbrannt wird.
- 4-5: Erhöhung des Drucks in der Verbrennungskammer nach der Verbrennung
- 5-6: Expansion der Gase von der Verbrennungskammer bei geöffnetem Ventil und Senkung des Drucks von P_{K}+ΔP_{K}=P₅ auf P₆=P_{K} (für 360°)
- 6-7: Expansion der Gase bei geschlossenem Ventil

Bei diesem Motor läuft die Verbrennung ununterbrochen ab. Für eine Umdrehung steigt der Druck P_{R} auf P_{R}+ΔP_{R}. Die Luft kommt dauernd in der Verbrennungskammer und der Druck sinkt wieder auf P_{R}. Der Druck in der Verbrennungskammer steigt von P_{K} auf P_{K}+ΔP_{K} und sinkt bei der Expansion wieder auf P_{K}, in der (P_{K}+ΔP_{K})<P_{R} .

Es ist auch eine Konstruktion mit nur einem Zylinder möglich, der die Komprimierung und Expansion ausführt(720° Zyklus).

### Vorteilhafte Wirkungen der Erfindung

Diese Motoren mit beiden Modifikationen weisen viele Vorteile auf:
1. Die Komprimierung verläuft annähernd isothermisch, zum Beispiel mit der Benutzung mehrstufiger Kompressoren und guter Kühlung.
2. Die Verbrennung entsteht in der Verbrennungskammer zyklisch oder ununterbrochen ohne größere thermische Verluste.
3. Die Expansion findet in der Expansionskammer statt- adiabatisch, ohne größere Wärmeverluste.
Alles das führt zu einem höheren Wirkungsgrad, höhere Umdrehungszahlen, relativ kleines Gewicht, kleinerer Spritverbrauch

### Bezeichnung wenigstens eines Weges zur Ausführung der Erfindung unter Bezugnahme der Zeichnungen

Zeichnung 6 zeigt einen solchen Motor 1
2 zeigt die Verdichtungskammer, in der die Komprimierung abläuft.
3 Verbrennungskammer mit konstantem Druck P.
4 Expansionskammer, in der die Expansion stattfindet.
   5,6 sind zwei Zylinderkolben
7,8 Pleuelstangen
9 ist die Kurbelwelle

Bei einer ganzen Umdrehung(360°) der Kurbelwelle 9 wird das Ansaugen und Komprimieren in der Verdichtungskammer ausgeführt. Die ganze frische Luft wird in der Verbrennungskammer 3 abgegeben, wo Sprit eingespritzt wird. Die Verbrennungskammer 3 ist immer unter konstantem Hochdruck P. Nach der Verbrennung steigt der Druck geringfügig auf P+ΔP. Wegen der Geometrie des Motors, wie Zeichnung 6 zeigt, hat der Sprit immer genug Zeit zur vollen Verbrennung, bis sich der Kolben 6 in der Expansionskammer 4 nach unten bewegt. Dann stoßen die Verbrennungsgase von der Verbrennungskammer 3 den Kolben 6 nach unten, der Druck in der Verbrennungskammer fällt von P+ΔP auf P. Dann wird die Öffnung zur Expansionskammer 4 geschlossen und es können keine Gase mehr von der Verbrennungskammer hineinströmen. Der Kolben 6 bewegt sich vom Druck der Gase über ihm weiter. Auf diese Weise wird thermische in mechanische Energie umgewandelt und es wird mechanische Arbeit ausgeführt. Bei der Bewegung des Kolbens 6 nach oben werden die Gase über den Kolben 6 vollständig in der Atmosphäre ausgestoßen.

Das ist nur ein Beispiel für ein Motor mit Hochdruckkammer und zyklische Verbrennung. Analog dazu arbeitet ein Motor mit dauernder Verbrennung, wie früher erwähnt.

## Patentansprüche

1. Verbrennungsmotor (1) mit zyklischer Verbrennung, mit einer separaten Verbrennungskammer (3) unter permanenten Hochdruck P, einer separaten Komprimierungskammer (2) mit einem ersten Zylinder und Kolben (5) und einer separaten Expansionskammer (4) mit einem zweiten Zylinder und Kolben (6), wobei die Kolben durch Pleuelstangen (7, 8) mit der Kurbel welle (9) verbunden sind; dadurch gekennzeichnet, daß das Volumen der Verbrennungskammer (3) relativ groß im Vergleich zum Volumen der Komprimierungskammer (2) ist, und daß ein Zyklus aus folgenden Phasen besteht :
a) Ansaugtakt in die Komprimierungskammer (2) ,
b) Komprimierung der angesaugten Luft bis auf P2 = P,
c) Einlaß in die Verbrennungskammer (3), wobei der Verbrennungsdruck in der Verbrennungskammer (3) geringfügig auf P3 erhöht wird,
d) Verbrennung in der Verbrennungskammer (3) unter konstantem Volumen, wobei der Druck in der Verbrennungskammer (3) geringfügig um ΔP auf P4 erhöht wird,
e) Auslaß der verbrannten Gase in die Expansionskammer (4), wobei der Druck in der Verbrennungskammer (3) auf P sinkt,
f) Expansion der Verbrennungsgase in der Expansionskammer (4) bis auf einen Druck P6 unter Verschluß der Verbrennungskammer (3),
g) Auslaß der verbrannten Gase in die Atmosphäre.

2. Verbrennungsmotor (1) mit dauerhafter Verbrennung, mit einer separaten Verbrennungskammer (3) unter Hochdruck, einer separaten Komprimierungskammer (2) mit einem ersten Zylinder und Kolben (5), einem zwischen Komprimierungs- und Verbrennungskammer eingebauten Luftreservoir (10) und einer separaten Expansionskammer (4) mit einem zweiten Zylinder und Kolben (6), wobei die Kolben durch Pleuelstangen (7, 8) mit der Kurbel welle (9) verbunden sind; dadurch gekennzeichnet, daß der Druck P_{R} im Luftreservoir (10) immer größer als der Druck in der Verbrennungskammer (3) bleibt, und
daß ein Zyklus aus folgenden Phasen besteht :
a) Ansaugtakt in die Komprimierungskammer (2) ,
b) Komprimierung der angesaugten Luft bis auf P2 = P_{R}
c) Einlaß ins Luftreservoir (10), wobei der Duck darin geringfügig auf P3 erhöht wird,
d) dauernder auslaß der Luft vom Luftreservoir (10) in die Verbrennungskammer (3), wo eine dauernde Verbrennung stattfindet und der Druck in der Verbrennungskammer (3) geringfügig um ΔP auf P5 erhöht wird,
e) Auslaß der verbrannten Gase in die Expansionskammer (4), wobei der Druck in der Verbrennungskammer (3) von P₅ auf P6 sinkt,
f) Expansion der Verbrennungsgase in der Expansionskammer (4) von P₆ bis auf einen Druck P7 unter Verschluß der Verbrennungskammer (3),
g) Auslaß der verbrannten Gase in die Atmosphäre.

## Claims

1. A combustion engine (1) with cyclical combustion, with a separate combustion chamber (3) under permanent high pressure P, a separate compression chamber (2) with a first cylinder and piston (5) and a separate expanding chamber (4) with a second cylinder and piston (6), where the pistons are connected to the connecting rods (7,8) and the crankshaft (9); to define therewith that the volume of the combustion chamber (3) is relativly big compered to the volume of the compress chamber (2), and that one cycle consists of the following phases:
a. Intake stroke in the compress chamber (2).
b. Compressing the incoming air until P₂=P.
c. Admittance to the combustion chamber (3), where the combustion pressure in the combustion chamber will go up to P₃.
d. Combustion in the combustion chamber (3) with constant volume, where the pressure in the combustion chamber (3) will go up slightly at ΔP to P₄.
e. Exhaust of the exhaust gas into the expanding chamber (4), where the pressure in the combustion chamber (3) goes down to P.
f. Expanding the exhaust gas in the Expanding chamber (4) until pressure P₆ with stoppered combustion chamber (3).
g. Expelling the exhaust gas into the atmosphere.

2. A combustion engine (1) with a continuous combustion, with a separate combustion chamber (3) under high pressure, a separate compress chamber (2) with a first cylinder and piston (5), one air reservoir (10) built-in between compress and combustion chamber and one separate expanding chamber (4) with a second cylinder and piston (6), where the pistons are connected to the connecting rods (7,8) and the crankshaft (9); to define therewith that the pressure P_{R} in the air reservoir always stays greater that the pressure in the combustion chamber (3), and that one cycle consists of the following phases:
a. Intake stroke in the compress chamber (2).
b. Compressing the incoming air until P₂=P.
c. Admittance to the air reservoir (10), where the pressure will go up slightly to P₃.
d. Continuous expulsion of the air from the air reservoir (10) into the combustion chamber (3), where a continuous combustion takes place and the pressure in the combustion chamber (3) will go up slightly at ΔP to P₅.
e. Exhaust of the exhaust gas into the expanding chamber (4), where the pressure in the combustion chamber (3) goes down from P₅ to P₆.
f. Expanding the exhaust gas in the expanding chamber (4) from P₆ to the pressure P₇ with stoppered combustion chamber (3).
g. Expelling the exhaust gas into the atmosphere.

## Revendications

1. Moteur à combustion interne (1) à combustion cyclique, avec une chambre particulière de combustion (3) sous haute pression permanente P. une chambre particulière de compression (2) avec un premier cylindre et piston (5) et une chambre particulière d'expansion (4) avec un deuxième cylindre et piston (6), avec les pistons joints à l'arbre de vilebrequin (9) par des brielles (7, 8) ; ce qui se caractérise par le volume de la chambre de combustion (3) étant relativement grand par rapport au volume de la chambre de compression (2) et par un cycle composé des phases suivantes :
a) Cadence d'aspiration dans la chambre de compression (2),
b) Compression de l'air aspiré jusqu'à P2 = P,
c) Admission dans la chambre de combustion (3) avec la pression dans la chambre de compression (3) s'augmentant futilement jusqu'à P3,
d) Combustion dans la chambre de combustion (3) sous volume constant avec la pression dans la chambre de compression (3) s'augmentant futilement par ΔP jusqu'à P4,
e) Echappement des gazes brûlées dans la chambre d'expansion (4) avec la pression dans la chambre de compression (3) se diminuant jusqu'à P,
f) Expansion des gazes brûlées dans la chambre d'expansion (4) jusqu'à une pression P6 avec la chambre de combustion (3) se fermant,
g) Echappement des gazes brûlées dans l'atmosphère.

2. Moteur à combustion interne (1) à combustion durable avec une chambre particulière de combustion (3) sous haute pression, avec une chambre particulière de compression (2) et avec un premier cylindre et piston (5), un réservoir à l'air (10) assemblé entre la chambre de compression et la chambre de combustion et avec une chambre particulière d'expansion (4) avec un deuxième cylindre et piston (6) avec les pistons joints à l'arbre de vilebrequin (9) par des brielles (7, 8); ce qui se caractérise par la pression P_{R} dans le réservoir à l'air (10) restant toujours plus haut que celui dans la chambre de combustion (3) et par un cycle composé des phases suivantes :
a) Cadence d'aspiration dans la chambre de compression (2),
b) Compression de l'air aspiré jusqu' P2 = P_{R},
c) Admission dans le réservoir à l'air (10) avec la pression là-dedans s'augmentant futilement jusqu'à P3,
d) Echappement permanente de l'air du réservoir à l'air (10) dans la chambre de combustion (3) où une combustion permanente ayant lieu et la pression dans la chambre de compression (3) s'augmentant futilement par ΔP jusqu'à P5,
e) Echappement des gazes brûlées dans la chambre d'expansion (4) avec la pression dans la chambre de compression (3) se diminuant de P₅ jusqu'à P6,
f) Expansion des gazes brûlées dans la chambre d'expansion (4) de P₆ jusqu'à une pression P7 avec la chambre de combustion (3) se fermant,
g) Echappement des gazes brûlées dans l'atmosphère.
